(19) Europäisches Patentamt
European Patent Office
Office européen des brevets

(11) **EP 0 576 954 B1**

(12) **EUROPEAN PATENT SPECIFICATION**

(45) Date of publication and mention
of the grant of the patent:
**13.05.1998 Bulletin 1998/20**

(51) Int Cl.6: **G11B 5/66**

(21) Application number: **93109884.2**

(22) Date of filing: **21.06.1993**

(54) **Method of magnetically recording information on magnetic recording medium**

Verfahren zur magnetischen Datenaufzeichnung auf magnetisches Aufzeichnungsmedium.

Méthode d'enregistrement magnétique de données sur un milieu d'enregistrement magnétique.

(84) Designated Contracting States:
**DE FR GB**

(30) Priority: **22.06.1992 JP 162970/92**

(43) Date of publication of application:
**05.01.1994 Bulletin 1994/01**

(73) Proprietor: **SONY CORPORATION
Tokyo (JP)**

(72) Inventors:
• **Chiba, Kazunobu, c/o SONY CORPORATION
Shinagawa-ku, Tokyo (JP)**
• **Sato, Kenichi, c/o SONY CORPORATION
Shinagawa-ku, Tokyo (JP)**
• **Arisaka, Yuichi, c/o SONY CORPORATION
Shinagawa-ku, Tokyo (JP)**
• **Toyosawa, Noriko, c/o SONY CORPORATION
Shinagawa-ku, Tokyo (JP)**

(74) Representative: **Müller, Frithjof E., Dipl.-Ing.
Patentanwälte
MÜLLER & HOFFMANN,
Innere Wiener Strasse 17
81667 München (DE)**

(56) References cited:
**EP-A- 0 409 216       DE-A- 3 939 625**

• **DATABASE WPI Week 8932, Derwent
Publications Ltd., London, GB; AN 89231117**

Remarks:
The file contains technical information submitted after the application was filed and not included in this specification

**Description**

BACKGROUND OF THE INVENTION

Field of the Invention:

The present invention relates to a method of magnetically transferring short-wavelength signals especially for use in high-band 8-mm video tape recorders or digital video tape recorders from a magnetic recording medium, as a mother, composed of a thin metal film to a magnetic recording medium, as a copy, composed of a thin metal film.

Description of the Prior Art:

Heretofore, magnetic recording mediums are widely used which comprise a nonmagnetic support coated with a magnetic coating composed of a powdery magnetic material such as a magnetic oxide powder, a magnetic alloy powder, or the like which is dispersed in an organic binder of a copolymer of vinyl chloride and vinyl oxide, polyester resin, urethane resin, polyurethane resin, or the like.

To meet demands for higher-density magnetic recording, there has been proposed a magnetic recording medium composed of a thin magnetic metallic film that is made of a magnetic metallic material such as a Co - Ni alloy, a Co - Cr alloy, Co - O alloy, or the like which is deposited on a nonmagnetic support such as a polyester film, a polyamide film, a polyimide film, or the like by a plating process or a vacuum thin-film forming process such as vacuum deposition, sputtering, ion plating, or the like.

The magnetic recording medium composed of a thin magnetic metallic film is advantageous in that it has a high coercive force, a large remanance ratio, high electromagnetic conversion characteristics at short wavelengths, very small recording demagnetization and a very small thickness loss because the thickness of the magnetic layer can be greatly reduced, and a high filling density for the magnetic material since it is not necessary to mix the binder, which is a nonmagnetic material, in the magnetic layer.

Oblique evaporation for obliquely evaporating a magnetic layer of a magnetic recording medium has been proposed and put to use in order to increase electromagnetic conversion characteristics of the magnetic recording medium for greater output capability.

Video tape recorders of the low-frequency conversion type for recording and reproducing image information in general are required to optimize a parameter referred to as the energy product as well as the residual flux density Br of a tape used because color characteristics in a longer wavelength range are also important.

The energy product is given according to the formula $Br \cdot \delta \cdot Hc$ [G·cm·Oe] where Br is the residual flux density, $\delta$ the thickness of the magnetic layer, and Hc the coercive force. Normally, the thickness $\delta$ of the magnetic layer is determined to satisfy both luminance and chroma characteristics.

However, digital video tape recorders which record digital image signals are required to be designed with more emphasis on characteristics in a shorter wavelength range than characteristics in a longer wavelength range. Particularly, digital video tape recorders for recording compressed digital image signals with reduced playback distortion are required to have high electromagnetic conversion characteristics and low error rate.

For copying a large quantity of recorded material from a magnetic recording medium such as a video or audio tape, it is general practice to magnetically transfer a recorded information from a magnetic recording medium as a mother, e.g., a mother tape, to a magnetic recording medium as a copy, e.g., a copy tape, while a biasing magnetic field, i.e., a transfer magnetic field, is being applied to the mother tape. This magnetic transfer process can copy a large amount of recorded information in a short period of time because it can transfer the recorded information at a high speed.

According to the conventional magnetic transfer process, the coercive force Hc of the mother magnetic recording medium is selected to be about 2.5 times the coercive force Hc of the copy magnetic recording medium in order to suppress demagnetization of the mother magnetic recording medium due to the biasing magnetic field and also to allow the recorded information to be easily recorded on the copy magnetic recording medium. However, even the mother magnetic recording medium with high coercive force fails to recover fully from the demagnetized state. The coated magnetic recording medium which has heretofore been in general use suffers a problem in that its reproduced output is lowered if desired information is recorded thereon in a shorter wavelength range for higher recording density.

Research and development efforts are being made with respect to magnetic recording mediums. Coated magnetic recording mediums, which are in wide use for the transfer process, include a metal-powder (MP) tape coated with magnetic alloy powder as a mother tape and a tape coated with magnetic oxide powder or magnetic barium ferrite powder as a copy tape.

Growing demands for high-density magnetic recording are drawing attention to a magnetic recording medium having a thin magnetic metallic film for use in the magnetic transfer process. The oblique evaporation for obliquely evaporating a magnetic layer is in use for increased electromagnetic conversion characteristics for greater output capability.

It has been proposed to improve the transfer efficiency by applying a biasing magnetic field obliquely at 45° with respect to an in-plane direction as disclosed in Japanese laid-open patent publication No. 57-138061. However, the proposed process has failed to achieve sufficient results with respect to demagnetization of a magnetic recording medium as a mother when recorded information is copied therefrom and also with respect to transfer efficiency.

In an attempt to solve the problems of demagnetization and transfer efficiency, there have been proposed a method of controlling more accurately the direction in which a biasing magnetic field is applied and a method of determining coercive forces of magnetic recording mediums for use as a mother and a copy, as disclosed in Japanese patent application No. 2-290372. These proposed methods, however, have proven unsatisfactory for use in a new magnetic recording system that is designed for shorter recording signal wavelengths, narrower recording tracks, and higher recording densities.

OBJECTS AND SUMMARY OF THE INVENTION

It is therefore an object of the present invention to improve a magnetic transfer process, i.e. the magnetic transfer efficiency, especially in a short wavelength range, of a magnetic recording medium for use as a mother in said magnetic transfer process.

According to the present invention, there is provided a magnetic recording process having the features of the appended claim 1.

As describe above, since the film thickness $T_o$ of the uppermost magnetic layer and the shortest wavelength $\lambda$ of a signal to be recorded by the magnetic recording medium satisfy the following relationship:

$$(\lambda/4) \leq T_o < (\lambda/2),$$

a reproduced output signal of the magnetic recording medium can be increased in level.

Furthermore, inasmuch as the film thickness $T_o$ of the uppermost magnetic layer and the total film thickness $T_{t-1}$ except the uppermost magnetic layer satisfy the following relationship:

$$T_o \leq T_{t-1},$$

a reproduced output signal of the magnetic recording medium can also be increased in level.

The film thickness of a thin metallic magnetic layer of the magnetic recording medium for use as a mother in a magnetic recording process is selected as described above to increase the magnetic transfer efficiency, particularly with respect to short-wavelength signals, for improving the electromagnetic conversion characteristics of the magnetic recording medium for use as a copy.

The above and other objects, features, and advantages of the present invention will become apparent from the following description of an illustrative embodiment thereof to be read in conjunction with the accompanying drawings, in which like reference numerals represent the same or similar objects.

BRIEF DESCRIPTION OF THE DRAWINGS

FIG. 1 is a schematic side elevational view of a vacuum evaporation system;
FIG. 2 is a block diagram of a recording signal processor of a magnetic recording and reproducing apparatus;
FIG. 3 is a diagram showing blocks used as units for coding;
FIG. 4 is a diagram showing a pixel arrangement of a signal;
FIG. 5 is a block diagram of a reproducing signal processor of the magnetic recording and reproducing apparatus;
FIG. 6 is a block diagram of a block coder of the magnetic recording and reproducing apparatus;
FIG. 7 is a block diagram of a channel encoder;
FIG. 8 is a block diagram of a channel decoder;
FIGS. 9A and 9B are views showing different magnetic head arrangements;
FIG. 10 is a view of a rotary head assembly;
FIG. 11 is a view of a magnetic head arrangement;
FIG. 12 is a view of the magnetic head arrangement shown in FIG. 11;
FIG. 13 is a diagram showing a reproduced output signal and a noise level as they depend upon the film thickness of an uppermost magnetic layer;

FIG. 14 is a diagram showing a relative reproduced output as it depends upon the total film thickness except that of the uppermost magnetic layer;

FIG. 15 is an enlarged fragmentary cross-sectional view of a magnetic recording medium as a mother;

FIG. 16 is an enlarged fragmentary cross-sectional view of a magnetic recording medium as a copy;

FIG. 17 is an enlarged fragmentary cross-sectional view showing magnetic characteristics of the magnetic recording medium as a copy;

FIG. 18 is an enlarged fragmentary cross-sectional view illustrative of a magnetic recording transfer process using the magnetic recording mediums shown in FIGS. 15, 16, and 17;

FIG. 19 is a diagram showing a copy output and a noise level as they depend upon the film thickness of an uppermost magnetic layer; and

FIG. 20 is a diagram showing a copy output as it depends upon the total film thickness of other than the uppermost magnetic layer.

## DETAILED DESCRIPTION OF THE PREFERRED EMBODIMENT

A magnetic recording medium according to the present invention comprises a nonmagnetic support and a magnetic layer deposited thereon, the magnetic layer being composed of a single thin magnetic metallic film or a plurality of thin magnetic metallic films each formed by depositing a ferromagnetic metallic material directly on the nonmagnetic support. The ferromagnetic metallic material may be any of various metallic materials insofar as it can be used in ordinary metal-evaporated tapes. For example, the ferromagnetic metallic material may be of a ferromagnetic metal such as Fe, Co, Ni, or the like, or of a ferromagnetic alloy such as Fe - Co, Co - Ni, Fe - Co - Ni, Fe - Cu, Co - Cu, Co - Au, Co - Pt, Mn - Bi, Mn - Al, Fe - Cr, Co - Cr, Ni - Cr, Fe - Co - Cr, Co - Ni - Cr, Fe - Co - Ni - Cr, or the like. The magnetic recording medium may include a substrate layer disposed between the nonmagnetic support and the thin magnetic metallic film or an intermediate layer or layers between the thin magnetic metallic films to increase bonding strength and control coercive forces therebetween. The magnetic layer may include an oxide layer near its surface to make itself resistant to corrosion.

The thin magnetic metallic films may be formed by a physical vapor deposition (PVD) process such as a vacuum evaporation process in which the ferromagnetic metallic material is heated, evaporated, and deposited on the nonmagnetic support in a vacuum, an ion plating process in which the ferromagnetic metallic material is evaporated in an electric discharge, or a sputtering process in which a glow discharge is generated in an atmosphere mainly composed of argon and atoms of a target surface are ejected by argon ions.

A protective layer may be formed on the ferromagnetic metallic material on the nonmagnetic support. Such a protective layer may be made of any of various materials that can generally be used to form a normal protective film for thin magnetic metallic films. For example, the protective layer may be made of carbon, $CrO_2$, $Al_2O_3$, BN, Co oxide, MgO, $SiO_2$, $Si_3O_4$, $SiN_x$, SiC, $SiN_x$ - $SiO_2$, $ZrO_2$, $TiO_2$, TiC, or the like, and may be in the form of a single film or a plurality of films or a composite film or films.

The magnetic recording medium according to the present invention is not limited to the above structures. It may include a backcoat layer, an undercoat layer on the nonmagnetic support, a lubricant layer, or a rust resistant layer. The backcoat layer may contain any known nonmagnetic pigment and any known resin binder. The lubricant layer and the rust resistant layer may be made of known materials.

In the case where the magnetic recording medium according to the present invention is used as a mother in a magnetic recording process, described later on, a biasing magnetic field may be applied in an oblique direction as disclosed in Japanese patent application No. 2-290372.

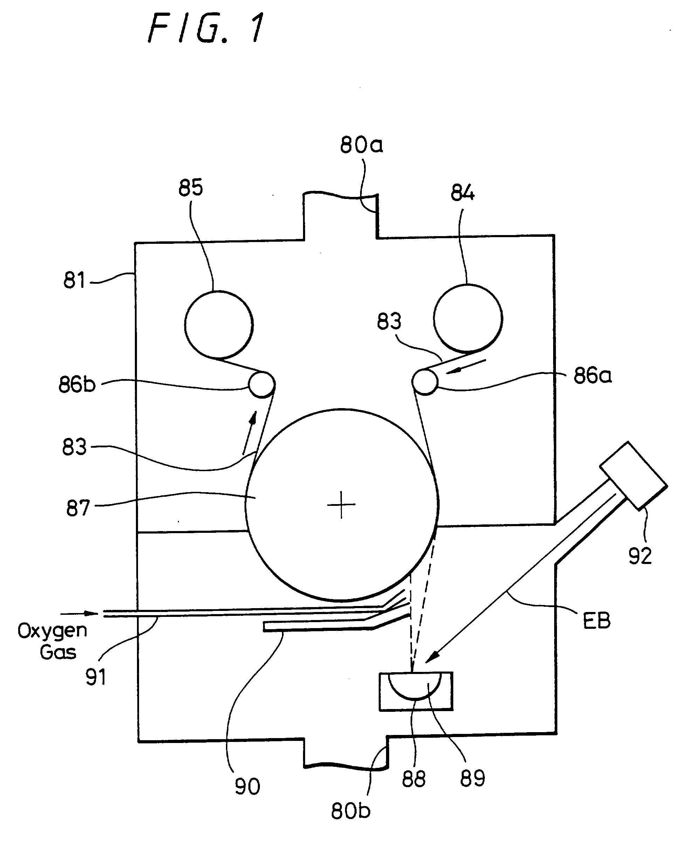

A vacuum evaporation system for manufacturing the magnetic recording medium according to the present invention will be described below with reference to FIG. 1. As shown in FIG. 1, the vacuum evaporation system has a vacuum chamber 81 that is evacuated through discharge ports 80a, 80b defined respectively in upper and lower panels thereof. The vacuum evaporation system also has a supply roll 84 and a takeup roll 85 that are positioned in the vacuum chamber 81. The supply roll 84 rotates clockwise in FIG. 1 at a constant speed, and the takeup roll 85 also rotates clockwise in FIG. 1 at a constant speed. A nonmagnetic support 83 in the form of a tape runs from the supply roll 84 to the takeup roll 85.

A cooling can 87, which has a diameter greater than the diameters of the supply and takeup rolls 84, 85, is disposed in the way of the nonmagnetic support 83 as it is supplied from the supply roll 84 to the takeup roll 85. The cooling can 87 is positioned to draw the nonmagnetic support 83 downwardly in FIG. 1, and rotates clockwise in FIG. 1 at a constant speed. The supply roll 84, the takeup roll 85, and the cooling can 87 comprise cylindrical bodies, respectively, each having an axial length substantially equal to the width of the nonmagnetic support 83. The cooling can 87 houses a cooling device (not shown) for cooling the nonmagnetic support 83 to control any deformations thereof which would result from temperature rises thereof.

The nonmagnetic support 83 is fed from the supply roll 84, travels around the cooling can 87, and is wound by the takeup roll 85. A guide roll 86a is disposed between the supply roll 84 and the cooling can 87, and a guide roll 86b is disposed between the cooling can 87 and the takeup roll 85. These guide rolls 86a, 86b serve to apply predetermined tension to the nonmagnetic support 83 as it runs from the supply roll 84 to the cooling can 87 and from the cooling can 87 to the takeup roll 85 for allowing the nonmagnetic support 83 to smoothly from the supply roll 84 over the cooling can 87 to the takeup roll 85.

A magnetic metallic material 89 is filled in a crucible 88 that is positioned below the cooling can 87 in the vacuum chamber 81. The crucible 88 has a width that is substantially the same as the width or longitudinal dimension of the cooling can 87.

An electron gun 92 for evaporating, with heat, the magnetic metallic material 89 filled in the crucible 88 is mounted on a side wall of the vacuum chamber 81. The electron gun 92 is positioned to direct an electron beam E3 emitted therefrom toward the magnetic metallic material 89 in the crucible 88. The magnetic metallic material 89 that has been evaporated by the application of the electron beam EB from the electron gun 92 is deposited as a magnetic layer on the nonmagnetic support 83 which travels at a constant speed on and around the cooling can 87.

A shutter 90 is disposed near the cooling can 87 between the cooing can 87 and the crucible 89. The shutter 90 extends to cover a predetermined region of the nonmagnetic support 83 running around the cooling can 87 for causing the evaporated magnetic metallic material 89 to be obliquely evaporated and deposited on the nonmagnetic support 83 in a predetermined angular range. During the oblique evaporation, an oxygen gas is supplied to the surface of the nonmagnetic support 83 through an oxygen gas introduction pipe 91 that extends through a side wall of the vacuum chamber 81. The supplied oxygen gas is effective to improve magnetic characteristics, durability, and weather resistance of the magnetic recording medium that is produced.

Various magnetic recording mediums in the form of tapes with different coercive forces, residual flux densities, and magnetic layer thicknesses were manufactured according to the following conditions:

Table 1

| Nonmagnetic support | | Polyethylene terephthalate 10 μm thick, 150 mm wide |
|---|---|---|
| Undercoat | | Coated with water-soluble latex mainly composed of acrylic resin Density: 10 million/mm$^2$ |
| Evaporating conditions | Ingot | $Co_{80}$ - $Ni_{20}$ wt% or $Co_{100}$ wt% |
| | Incident angle | $45 \sim 90°$ |
| | Amount of oxygen introduced | $3.3 \times 10^{-6}$ m$^3$/sec. |
| | Vacuum during evaporation | $7 \times 10^{-2}$ Pa |
| Backcoat | | Coated with a mixture of carbon and urethane binder to 0.6 μm |
| Topcoat | | Coated with perfluoropolyether |
| Slit width | | 8 mm |

The magnetic layer thicknesses were adjusted under constant evaporating conditions by varying the speed at which the nonmagnetic supports were fed. In case two magnetic layers were formed, the lower magnetic layer was first evaporated on the nonmagnetic support, then the tape was wound back, and the upper magnetic layer was evaporated on the upper magnetic layer.

Tables 2-1, 2-2 below shows magnetic characteristics in in-plane directions of the magnetic recording mediums and electromagnetic conversion characteristics thereof. The electromagnetic conversion characteristics were measured using a modification of EVS-900 manufactured by Sony. Information was recorded at a wavelength $\lambda = 0.5$ μm. The electromagnetic conversion characteristics of Comparative Example 1 had a reference value of 0 dB, and the electromagnetic conversion characteristics of other Examples were indicated by relative values with respect to the reference value.

Table 2-1

| | Coercive force Hc [Oe] | Residual flux density Br [G] | Film thickness Upper/Lower layers (nm) [Å] |
|---|---|---|---|
| Inventive Example 1 | 1430 | 4300 | [1000/1000] (100/100) |
| Inventive Example 2 | 1490 | 4400 | [1000/1500] (100/150) |

Table 2-1   (continued)

|  | Coercive force Hc [Oe] | Residual flux density Br [G] | Film thickness Upper/Lower layers (nm) [Å] |
|---|---|---|---|
| Inventive Example 3 | 1490 | 4400 | [800/1500] (80/150) |
| Comparative Example 1 | 1040 | 3800 | [1800/0] (180/0) |
| Comparative Example 2 | 1350 | 4080 | [2500/0] (250/0) |

Table 2-2

|  | Energy product [OeGcm] | Output [dB] | Error rate ($\times 10^{-5}$) |
|---|---|---|---|
| Inventive Example 1 | 123 | + 1.6 | 5.3 |
| Inventive Example 2 | 164 | + 2.3 | 2.6 |
| Inventive Example 3 | 151 | + 2.0 | 2.9 |
| Comparative Example 1 | 71 | 0 | 43 |
| Comparative Example 2 | 138 | + 0.2 | 15 |

As can be seen from Tables 2-1, 2-2, the output signals of Inventive Examples 1 ~ 3 were greatly increased, and the error rates of Inventive Examples 1 ~ 3, as measured using a digital video tape recorder (VTR), described later on, were of relatively low values below $1 \times 10^{-4}$. The error rates of Comparative Examples 1, 2 were of values in excess of $1 \times 10^{-4}$, making it difficult to reduce errors to a correctable range if an error correcting code having a redundancy of about 20 % were used.

A magnetic recording and reproducing apparatus of the digital video tape recorder which was used to measure the error rates above will be described below. In the magnetic recording and reproducing apparatus, an input digital image signal is converted into blocks of data each composed of a plurality of pixel data, the block data of each block are coded into compressed data, which are then encoded into channel data, and the channel data are recorded on a magnetic recording medium by a magnetic head mounted on a rotary drum.

Generally, a component-type D1-format digital VTR and a composite-type D2-format digital VTR for use in broadcasting stations have been used for recording a digital color video signal on a recording medium such as a magnetic tape or the like.

In the D1-format digital VTR, a luminance signal and first and second color difference signals are converted into digital signals at respective sampling frequencies of 13.5 MHz and 6.75 MHz, and the digital signals are processed and recorded on a magnetic tape. Since the sampling frequencies for the luminance signal and first and second color difference signals have a ratio of 4 : 2 : 2, the D1-format digital VTR is also referred to as a digital VTR of 4 : 2 : 2 system.

In the D2-format digital VTR, a composite color video signal is converted into a digital signal by being sampled at a frequency which is four times the frequency of the color subcarrier signal, and the digital signal is processed and recorded on a magnetic tape.

Since each of these D1- and D2-format digital VTRs is designed for use in broadcasting stations, design priority is given to improving the quality of recorded video images, and a digital color video signal which has been converted from an analog video signal such that one sample is of 8 bits, for example, is recorded without being substantially compressed.

Even if a large cassette tape is used, the D1-format digital VTR, for example, can reproduce a recorded video signal from the tape for up to about 1.5 hours. Therefore, these digital VTRs are not suitable for consumer use in home.

In the digital VTR according to the present invention, a signal having a shortest wavelength of 0.5 μm is recorded in a track width of 5 μm, for example, to achieve a recording density of 1.25 μm2/bit, and information to be recorded is compressed in a form to reduce playback distortion. The digital VTR according to the present invention is thus capable of recording and reproducing video information on and from a magnetic tape having a tape width of 8 mm or less, for a longer period of time.

The digital VTR according to the present invention will be described below.

a. SIGNAL PROCESSORS

Signal processors of the digital VTR will be described below.

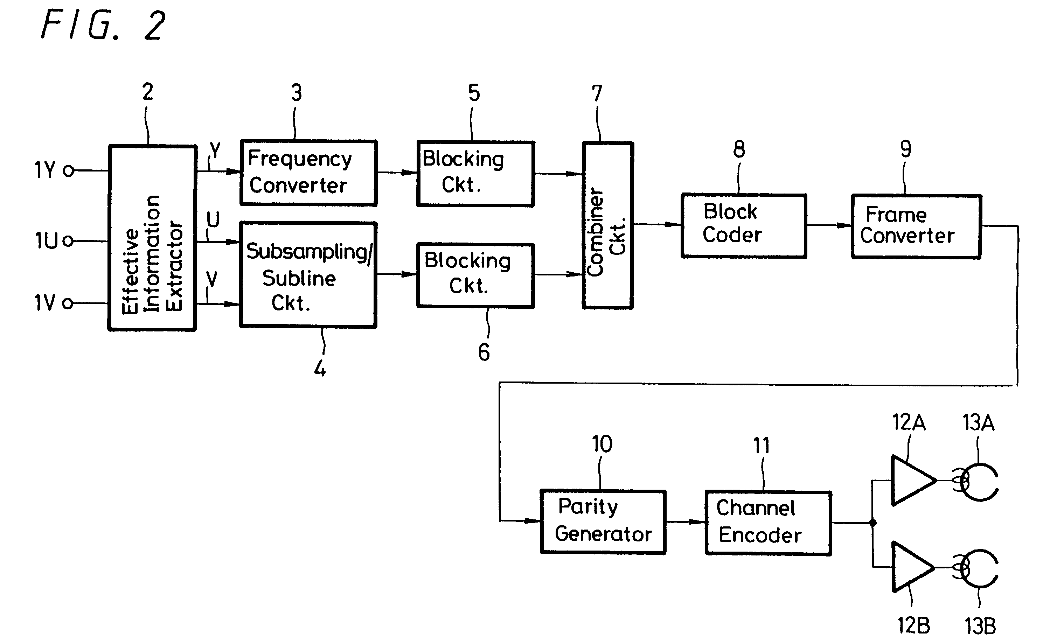

FIG. 2 shows a recording signal processor of the digital VTR. As shown in FIG. 2, a digital luminance signal Y and digital color difference signals U, V which are derived from three primary signals R, G, B supplied from a color video camera, for example, are supplied respectively to input terminals 1Y, 1U, 1V. The clock rates of the supplied signals are the same as the frequencies of the component signal of D1 format. Specifically, the sampling frequencies for the signals are 13.5 MHz and 6.75 MHz, and the number of bits per sample is 8. The amount of data of the signals supplied to the input terminals 1Y, 1U, 1V is about 216 Mbps. The amount of data of the signals is compressed to about 167 Mbps by an effective information extractor 2 which removes data of blanking time from the signals to extract only information in an effective area.

The luminance signal Y from the effective information extractor 2 is supplied to a frequency converter 3, and its sampling frequency of 13.5 MHz is converted into 3/4. The frequency converter 3 may comprise a decimating filter to avoid aliasing. An output signal from the frequency converter 3 is supplied to a blocking circuit 5, which converts a sequence of luminance data into a sequence of blocks. The blocking circuit 5 is included in combination with a block coder 8.

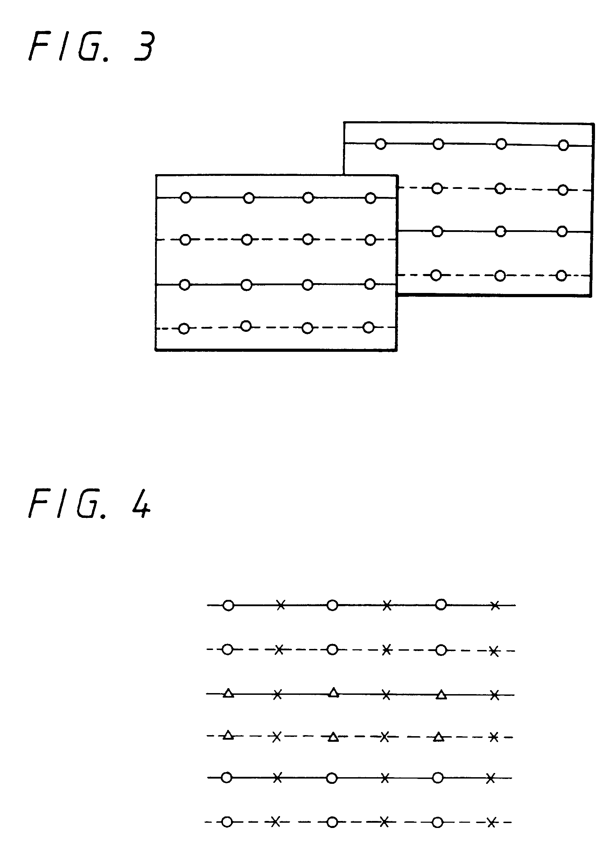

FIG. 3 shows a structure of blocks used as units for coding. The illustrated structure is of three-dimensional blocks. When an image of two frames, for example, is divided, there are produced a number of unit blocks of (4 lines × 4 pixels × 2 frames) as shown. Lines of an odd-numbered field are indicated by the solid lines, and lines of an even-numbered field are indicated by the broken lines.

The two color difference signals U, V outputted from the effective information extractor 2 are supplied to a subsampling/subline circuit 4, which converts their sampling frequency from 6.7 MHz to its half. Thereafter, the two digital color difference signals are selected line by line, and synthesized into one-channel data. Therefore, the subsampling/subline circuit 4 produces a linearly sequential digital color difference signal. FIG. 4 shows the pixel arrangement of a signal subsampled and sublined by the subsampling/subline circuit 4. In FIG. 4, the mark ○ indicates subsampled pixels of the first color difference signal U, the mark △ subsampled pixels of the second color difference signal V, and × the positions of pixels decimated by the subsampling.

The linearly sequential output signal from the subsampling/subline circuit 4 is supplied to a blocking circuit 6. As with the blocking circuit 5, the blocking circuit 6 converts color difference data of a scanning sequence of the television signal into data of a sequence of blocks. Specifically, the blocking circuit 6 converts the color difference data into a block structure of (4 lines × 4 pixels × 2 frames). The blocking circuits 5, 6 supply their output signals to a combiner circuit 7.

The combiner circuit 7 converts the luminance and color difference signals that have been converted into block sequences into one-channel data, and supplies an output signal, indicative of the converted one-channel data, to the block coder 8. The block coder 8 may comprise an adaptive dynamic range coder (ADRC) adapted to a dynamic range of each block, or a discrete cosine transform (DIT) circuit. An output signal from the block coder 8 is supplied to a frame converter 9, which converts the supplied signal into data of a frame structure. The frame converter 9 effects an exchange from a clock signal of the pixel system and a clock signal of the recording system.

The frame converter 9 supplies its output signal to a parity generator 10 which generates parity of an error correcting code. The parity generator 10 supplies its output signal to a channel encoder 11, which effects channel encoding to reduce low-frequency components of data to be recorded. An output signal from the channel encoder 11 is supplied through recording amplifiers 12A, 12B and a rotary transformer (not shown) to a pair of magnetic heads 13A, 13B, which then records the signal on a magnetic tape. Audio and video signals are separately compressed and supplied to the channel encoder 11.

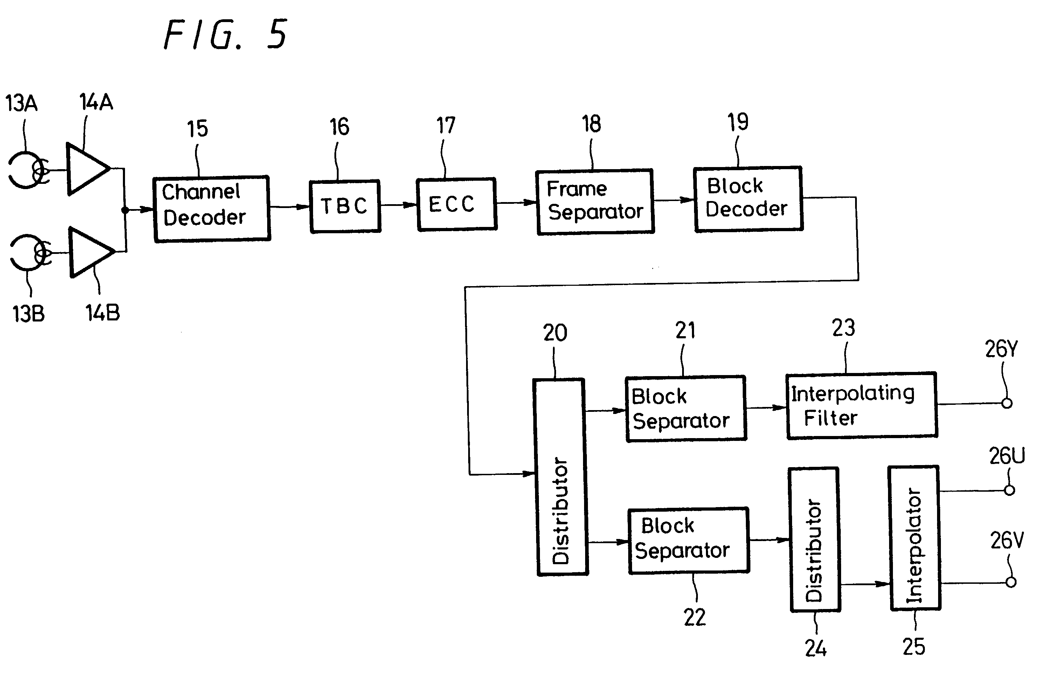

FIG. 5 shows a reproducing signal processor of the digital VTR. As shown in FIG. 5, reproduced data from the magnetic heads 13A, 13B are supplied through the rotary transformer and playback amplifiers 14A, 14B to a channel decoder 15. The channel decoder 15 decodes channel data and supplies its output signal to a time base corrector (TBC) 16 which removes time base variations of the reproduced signal. The reproduced data from the TBC 16 is supplied to an error correcting circuit (ECC) 17 which corrects the data with an error correcting code. The ECC 17 supplies its output signal to a frame separator 18.

The frame separator 18 separates the components of the block-coded data, and carries out an exchange from the clock signal of the recording system and the clock signal of the pixel system. The separated data from the frame separator 18 are then supplied to a block decoder 19, which decodes the data into data corresponding to the original data in each of the blocks. The decoded data are supplied to a distributor 20. The distributor 20 divides the supplied data into a digital luminance signal and digital color difference signals, which are then supplied to block separators 21, 22. The block separators 21, 22 converts the decoded data in a sequence of blocks into data in a raster scanning sequence.

The decoded luminance signal from the block separator 21 is supplied to an interpolating filter 23. The interpolating filter 23 converts the sampling rate of the luminance signal into 3 fs to 4 fs (4 fs = 13.5 MHz). The interpolating filter 23 applies a digital luminance signal Y to an output terminal 26Y.

The digital color difference signals from the block separator 22 are supplied to a distributor 24, which divides the linearly sequential digital color difference signals into digital color difference signals U, V. The digital color difference signals U, V from the distributor 24 are supplied to an interpolator 25. The interpolator 25 interpolates the data of decimated lines and pixels using the decoded pixel data. The interpolator 25 produces digital color difference signals U, V whose sampling rate is 2 fs, and applies them respectively to output terminals 26U, 26V.

## b. BLOCK CODING

The block coder 8 shown in FIG. 2 comprises an ADRC encoder. The ADRC encoder detects maximum and minimum values MAX, MIN of a plurality of pixel data contained in each block, detects a dynamic range DR of each block from the maximum and minimum values MAX, MIN, encodes the data in a manner adapted to the dynamic range DR, and quantizes again the data with a smaller number of bits than the number of bits of the original pixel data. The block coder 8 may alternatively comprise a device which subjects the pixel data of each block to a DCT process, quantizes the coefficient data produced by the DCT process, and compresses the quantized data into a run-length-Huffman code.

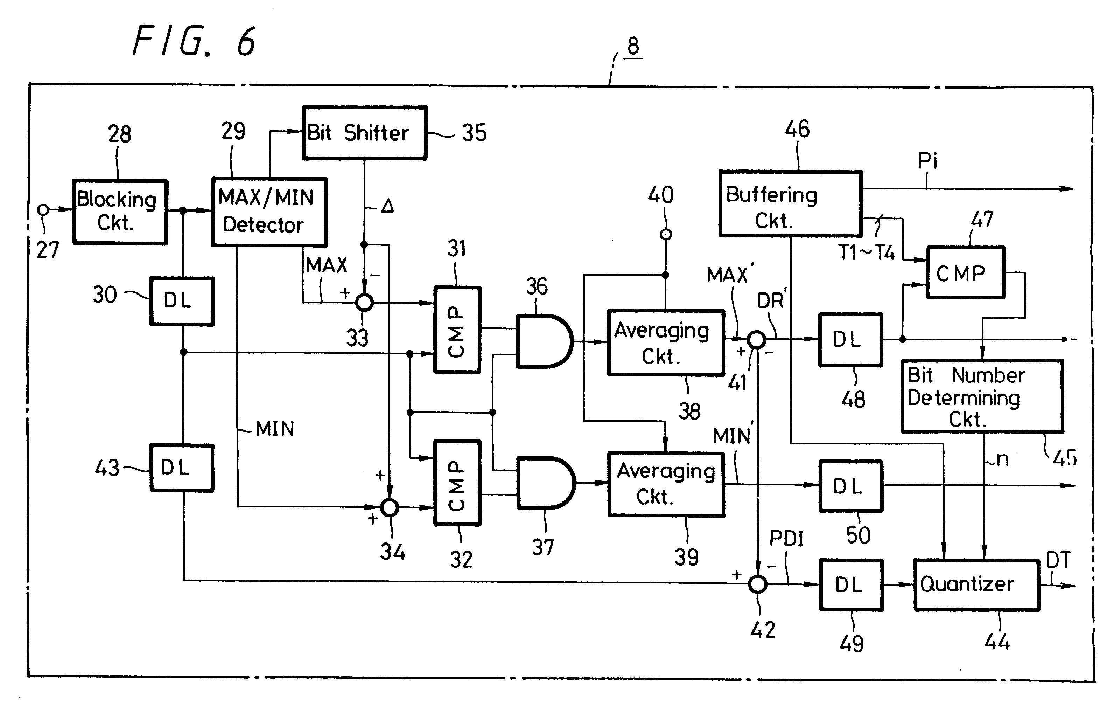

The block coder 8 in the form of an ADRC encoder that is designed for preventing image quality from being degraded in a multiple dubbing process will be described below with reference to FIG. 6.

A digital video signal (or a digital color difference signal) whose one sample has been quantized into 8 bits is supplied from the combiner circuit 7 in FIG. 2 to an input terminal 27 shown in FIG. 6. The digital video signal is supplied from the input terminal 27 to a blocking circuit 28, which supplies blocked data to a maximum/minimum detector 29 and delay circuits 30, 43. The maximum/minimum detector 29 detects maximum and minimum values MAX, MIN of the data of each block. The delay circuit 30 delays the supplied data for a period of time that is required for the maximum and minimum values MAX, MIN to be detected by the maximum/minimum detector 29. The delay circuit 30 supplies delayed pixel data to comparators 31, 32.

The maximum value MAX from the maximum/minimum detector 29 is supplied to a subtractor 33, and the minimum value MIN from the maximum/minimum detector 29 is supplied to an adder 34. The subtractor 33 and the adder 34 are supplied with the value ($\Delta = 1/16DR$) of the width of one quantizing step upon nonedge matching with a fixed length of 4 bits, from a bit shifter 35. The bit shifter 35 shifts the dynamic range by 4 bits to effect a division of (1/16). The subtractor 33 produces a threshold value of (MAX - $\Delta$), whereas the adder 34 produces a threshold value of (MAX + $\Delta$). The threshold values from the subtractor 33 and the adder 34 are supplied to respective comparators 31, 32. The value $\Delta$ which governs the threshold values is not limited to the quantizing step width, but may be a fixed value corresponding to a noise level.

The comparator 31 supplies its output signal to an AND gate 36, and the comparator 32 supplies its output signal to an AND gate 37. The AND gates 36, 37 are supplied with the input data from the delay circuit 30. The output signal from the comparator 31 goes high in level when the input data is greater than the threshold value. Therefore, the AND gate 36 extracts at its output terminal pixel data of input data contained in a maximum level range of (MAX ~ MAX - $\Delta$). The output signal from the comparator 32 goes high in level when the input data is smaller than the threshold value. Therefore, the AND gate 37 extracts at its output terminal pixel data of input data contained in a minimum level range of (MIN ~ MIN + $\Delta$).

The output signal from the AND gate 36 is supplied to an averaging circuit 38, and the output signal from the AND gate 37 is supplied to an averaging circuit 39. These averaging circuits 38, 39 calculate average values in the respective blocks, and are supplied with a reset signal at the period of blocks from a terminal 40. The averaging circuit 38 produces an average value MAX' of the pixel data belonging to the maximum level range of (MAX ~ MAX - $\Delta$). The averaging circuit 39 produces an average value MIN' of the pixel data belonging to the minimum level range of (MIN ~ MIN + $\Delta$). A subtractor 41 subtracts the average value MIN' from the average value MAX', producing a dynamic range DR'.

The average value MIN' is supplied to a subtractor 42, which subtracts the average value MIN' from the input data that has passed through the delay circuit 43, producing data PDI from which the minimum value has been removed. The data PDI and the corrected dynamic range DR' are supplied to a quantizer 44. In this embodiment, the number n of bits assigned to quantization is a variable-length ADRC which is the number of either one of 0 bit (the code signal is not transferred), 1 bit, 2 bits, 3 bits, and 4 bits, and edge matching quantization is effected. The number n of assigned bits is determined by a bit number determining circuit 45 for each block, and the data representing the bit number n is supplied to the quantizer 44.

The variable-length ADRC allows efficient encoding when the number n of assigned bits is reduced for those blocks whose dynamic range DR' is smaller and when the number n of assigned bits is increased for those blocks whose dynamic range DR' is greater. More specifically, if threshold values for determining the bit number n are indicated by $T_1 \sim T_4$ ($T_1 < T_2 < T_3 < T_4$), then the code signal is not transferred and only the information of the dynamic range DR' is transferred for those blocks whose dynamic range DR' is smaller than the threshold value $T_1$, the bit number n is set to n = 1 for those blocks whose dynamic range DR' falls in the range of $T_1 \leq DR' < T_2$, the bit number n is set to n = 2 for those blocks whose dynamic range DR' falls in the range of $T_2 \leq DR' < T_3$, the bit number n is set to n = 3 for those blocks whose dynamic range DR' falls in the range of $T_3 \leq DR' < T_4$, and the bit number n is set to n = 4 for those blocks whose dynamic range DR' falls in the range of DR' $\geq T_4$.

With this variable-length ADRC, the amount of reproduced information can be controlled, i.e., buffered, by changing the threshold values $T_1 \sim T_4$. Therefore, the variable-length ADRC can apply to a transmission path such as the digital video tape recorder according to the present invention which is required to keep a predetermined amount of information generated per field or per frame.

The threshold values $T_1 \sim T_4$ for keeping a predetermined amount of generated information are determined by a buffering circuit 46 that has a plurality of combinations, e.g., 32 combinations, of the threshold values $T_1, T_2, T_3, T_4$. These combinations of the threshold values $T_1, T_2, T_3, T_4$ are distinguished by parameter codes Pi (i = 0, 1, 2, ···, 31). As the number i of the parameter codes Pi increases, the amount of generated information decreases monotonously. However, as the amount of generated information decreases, the quality of reproduced images becomes poorer.

The threshold values $T_1 \sim T_4$ from the buffering circuit 46 are supplied to a comparator 47, which is also supplied with the dynamic range DR' as it has passed through a delay circuit 48. The delay circuit 48 delays the dynamic range DR' for a period of time that is needed for the buffering circuit 46 to determined a combination of threshold values. A comparator 47 compares the dynamic range DR' of a block with the threshold values, and applies its output signal to the bit number determining circuit 45, which determines the number n of bits assigned to that block. The quantizer 44 quantizes, by way of etching matching, the data PDI, with the minimum value removed therefrom, from a delay circuit 49 into a code signal DT, using the dynamic range DR' and the bit number n. The quantizer 44 comprises a ROM, for example.

The corrected dynamic range DR' and the average value MIN' are outputted respectively from the delay circuits 48, 50. The code signal DT and a parameter Pi indicative of the combination of threshold values are outputted respectively from the quantizer 44 and the buffering circuit 46. In the illustrated embodiment, any degradation of images as they are dubbed is small because signals that have been quantized by way of non-edge matching are quantized again by way of edge matching based on dynamic range information.

## c. CHANNEL ENCODER AND CHANNEL DECODER

The channel encoder 11 shown in FIG. 2 and the channel decoder 15 shown in FIG. 5 will be described in detail below.

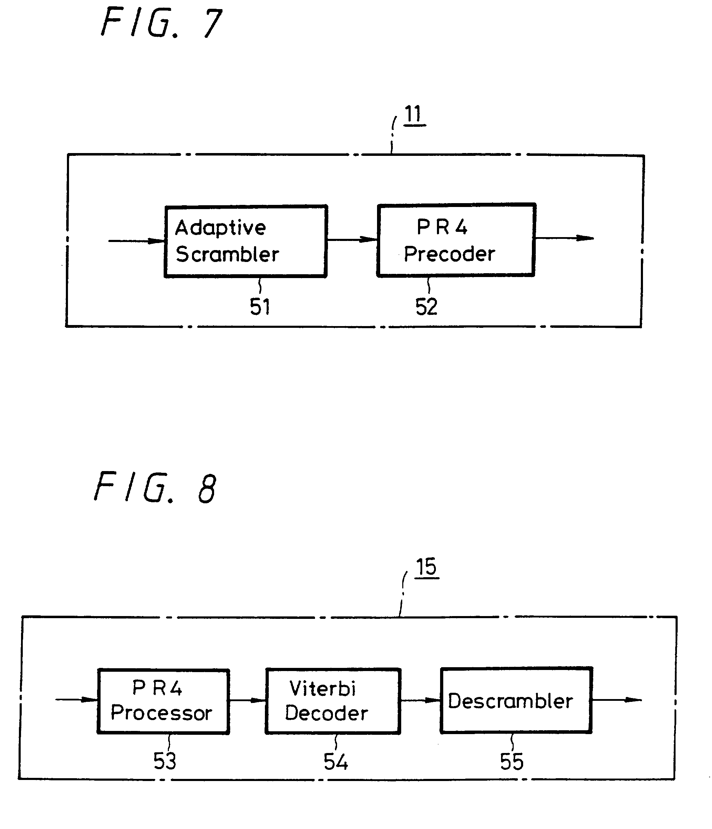

As shown in FIG. 7, the channel encoder 11 comprises an adaptive scrambler 51 of a plurality of M sequences which is supplied with the output signal from the parity generator 10. The adaptive scrambler 51 selects one of the M sequences which produces an output signal with least high-frequency and DC components in response to the input signal. The adaptive scrambler 51 also has a precoder 52 of the partial response class-4 detection type which carries out an arithmetic operation of $1/1 - D^2$ (where D is a unit delay). An output signal from the adaptive scrambler 51 is supplied through the recording amplifiers 12A, 13A and recorded by the magnetic heads 13A, 13B. The recorded signal is reproduced by the magnetic heads 13A, 13B and amplified by the playback amplifiers 14A, 14B.

As shown in FIG. 8, the channel decoder 15 has a processor 53 of the partial response class-4 detection type which effects an arithmetic operation of $1 + D$ on output signals from the playback amplifiers 14A, 14B. The channel decoder 15 also includes a Viterbi decoder 54 which decodes the output signal from the processor 53 into noise-resistant data based on arithmetic operations for data correlation and probability. The Viterbi decoder 54 supplies the decoded data to a descrambler 55, which descrambles the data scrambled by the channel encoder 11 back into the original sequence of data. The Viterbi decoder 54 allows the data to be decoded with a better playback C/N of 3 dB than if the data were decoded bit by bit.

## d. TAPE TRANSPORT SYSTEM

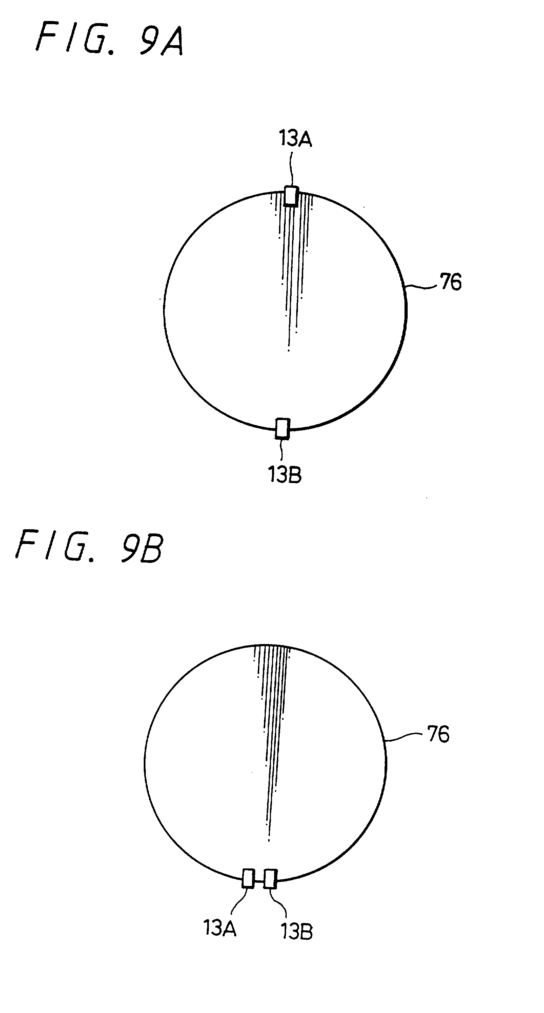

The magnetic heads 13A, 13B are integrally mounted on a drum 76 as shown in FIGS. 9A and 9B. In FIG. 9A, the magnetic heads 13A, 13B on the drum 76 are positioned diametrically opposite to each other. In FIG. 9B, the magnetic heads 13A, 13B on the drum 76 are positioned adjacent to each other.

A magnetic tape (not shown) is wrapped obliquely around the circumferential surface of the drum 76 through a wrapping angle slightly larger or smaller than 180° such that the magnetic heads 13A, 13B simultaneously scan the magnetic tape.

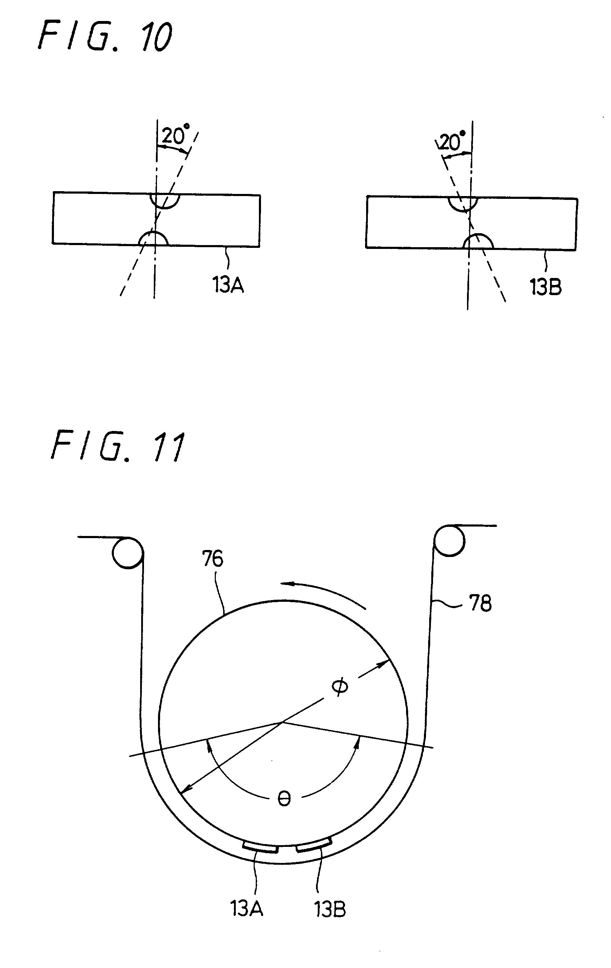

As shown in FIG. 10, the magnetic heads 13A, 13B have respective gaps oriented away from each other for reducing any crosstalk between adjacent tracks due to an azimuth loss during playback. For example, the gap of the magnetic head 13A is inclined + 20° to the track width and the gap of the magnetic head 13B is inclined - 20° to the track width.

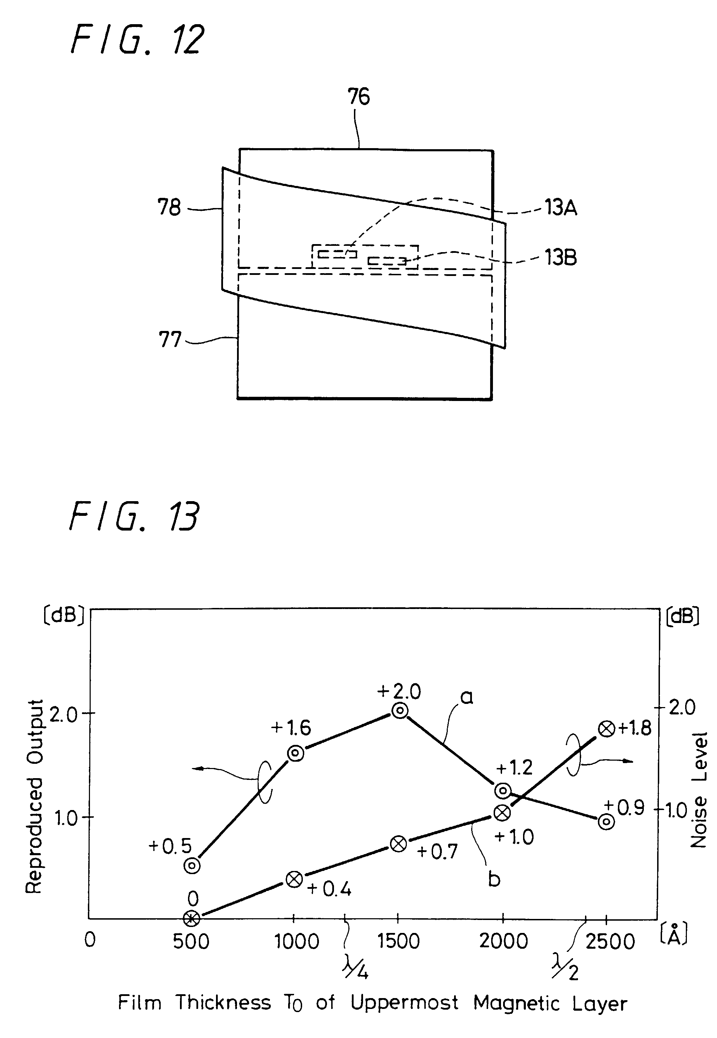

FIGS. 11 and 12 show a specific magnetic head arrangement in which the magnetic heads 13A, 13B are of an integral structure referred to as a so-called double-azimuth head. The magnetic heads 13A, 13B which are of an integral structure are mounted on an upper drum 76 that is rotatable at high speed, and a lower drum 77 is fixed or nonrotatable with respect to the upper drum 76. The wrapping angle θ through which a magnetic tape 78 is wrapped around the drums 76, 77 is 166°, and the drums 76, 77 have a diameter φ of 16.5 mm.

Data of one field is recorded in five tracks on the magnetic tape 78. Since the length of each of the tracks is reduced by this segment recording process, any error that arises due to the linearity of the tracks is reduced.

Inasmuch as the data is simultaneously recorded by the double-azimuth head in the magnetic head arrangement shown in FIGS. 11 and 12, any error caused by the linearity of the tracks is smaller than would be if the two magnetic heads were angularly spaced 180° from each other. The small distance between the magnetic heads allows head pairing adjustments to be effected more accurately. The tape transport system shown in FIGS. 11 and 12 permits signals to be recorded on and reproduced from narrower tracks on the magnetic tape.

While the digital VTR used to measure the error rate has been described above, the magnetic recording medium according to the present invention is not limited to use with the illustrated magnetic recording and reproducing apparatus, but may be used with any of various other magnetic recording and reproducing apparatus.

The thickness of each of the magnetic layers of the magnetic recording medium according to Inventive Example 1 was varied, and changes of the reproduced output signal from the magnetic recording due to the variations of the thickness were measured using the digital VTR described above to ascertain an optimum range of film thicknesses for the magnetic layers.

Only the film thickness of the uppermost magnetic layer was varied from 50 nm (500 Å) to 250 nm (2500 Å), and the film thickness of the lowermost magnetic layer was kept at 200 nm (2000 Å). The reproduced output signal and the noise level of the magnetic tapes were measured, and the measured results are shown in FIG. 13. The shortest recorded wavelength λ was 0.5 μm, and the reproduced output signal was measured while the relative speed was 3.8 m/s. The noise level was measured at 7 MHz. The reproduced output signal and the noise level of Comparative Example 1 were set to 0 dB, and the other output signals and the noise levels were of relative values with respect thereto. The solid-line curve a represents the reproduced output signal, whereas the solid-line curve b represents the noise level.

It can be seen from FIG. 13 that the reproduced output signal increased as the film thickness was greater than 50 nm (500 Å), i.e., $\lambda/10$, was maximum at the film thickness of about 150 nm (1500 Å), and gradually decreased as the film thickness was greater than 250 nm (2500 Å). In this Example the film thickness $T_o$ is selected to be equal to or greater than $\lambda/10$ and smaller than $\lambda/2$. For a reproduced output signal greater than the conventional reproduced output level by about 1 dB or more, the film thickness To should preferably have a lower limit of about $\lambda/6$.

It is recognized that the depth to which signals are recorded on general metal-evaporated tapes is about $\lambda/4$ as with the coated recording mediums. Therefore, the film thickness To of the uppermost magnetic layer of a metal-evaporated tape should preferably have a lower limit of about $\lambda/4$.

If the film thickness of the magnetic layer were too large, the waveform of reproduced output signals would be unstable, and the S/N ratio thereof would be lowered, making the magnetic tape unpractical. The magnetic tape would tend to develop cracks, and hence would be reduced in reliability. The time required for film growth on the magnetic tape would be increased, resulting in a reduction in productivity. To prevent the magnetic tape from developing cracks, the film thickness To of the uppermost magnetic layer should preferably be up to 200~250 nm (2000 ~ 2500 Å) from a practical point of view.

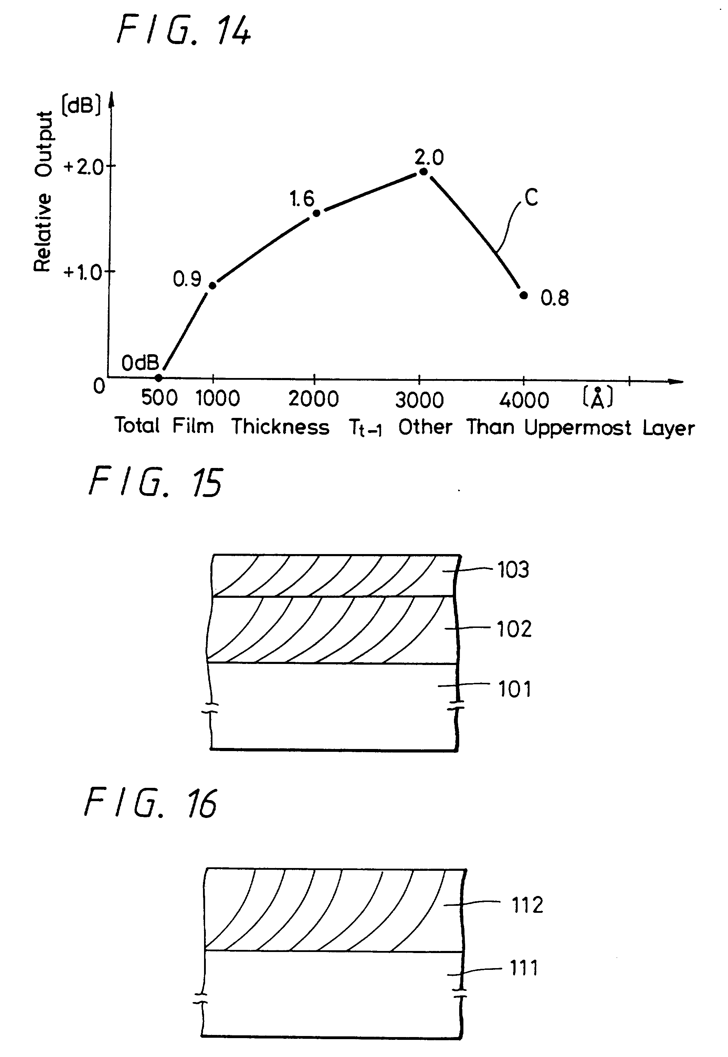

FIG. 14 shows reproduced output signals measured when the total film thickness $T_{t-1}$ except the uppermost magnetic layer was varied and the shortest recorded wavelength λ was 1 μm. The uppermost magnetic layer had a constant thickness of 100 nm (1000 Å), and the relative speed was 3.8 m/s. The reproduced output signal of Comparative Example 1 at λ = 1 μm was set to 0 dB, and the other output signals were of relative values with respect thereto. FIG. 14 indicates that when the total film thickness $T_{t-1}$ of the lower magnetic layer was 50 nm (500 Å), the reproduced output signal was about the same as that of Comparative Example 1, and no advantage accrued from the multiple magnetic layer structure in a relatively long wavelength range.

When the total film thickness $T_{t-1}$ of the lower magnetic layer increased beyond the film thickness $T_o$ of the uppermost magnetic layer, the copy output signal increased, and became maximum when the total film thickness $T_{t-1}$ was 300 nm (3000 Å), indicating an advantage owing to the increased entire film thickness including that of the uppermost magnetic layer. According to the present invention, therefore, the ratio of the film thickness $T_o$ of the uppermost magnetic layer to the total film thickness $T_{t-1}$ except the uppermost magnetic layer is selected to be $T_o \leq T_{t-1}$.

If the total film thickness $T_{t-1}$ of the lowermost magnetic layer were about 400 nm (4000 Å) and the entire film thickness including that of the uppermost magnetic layer were about 500 nm (5000 Å), the reproduced output signal would be reduced due to a degradation of the surface configuration of the recording medium, resulting in a reliability reduction. Consequently, the entire film thickness including that of the uppermost magnetic layer should preferably have an upper limit of 500 nm (5000 Å).

Specific magnetic recording mediums for use as a mother and a copy in the magnetic transfer process according to the present invention will be described below. However, the present invention should not be interpreted as being limited to these specific magnetic recording mediums.

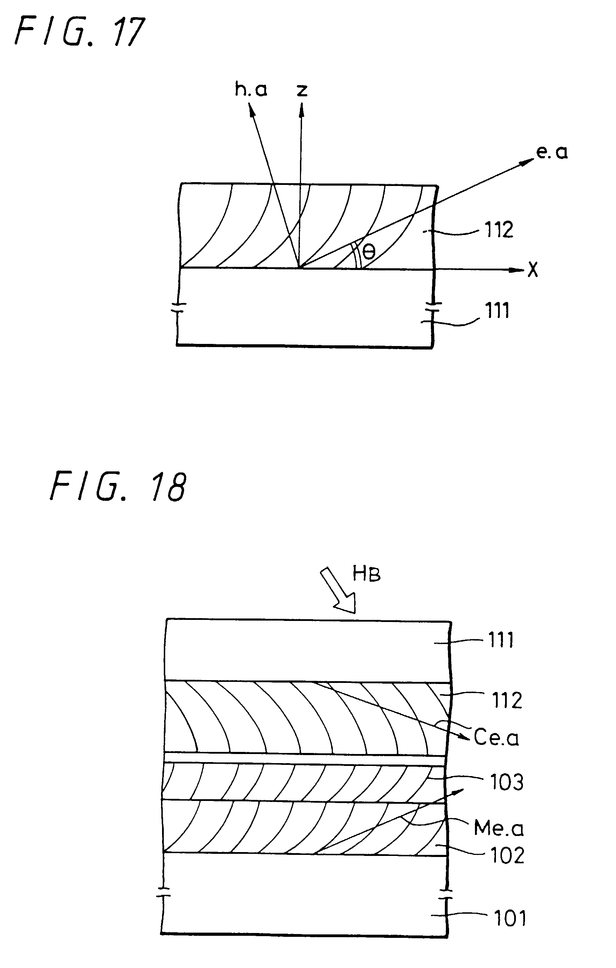

FIGS. 15 and 16 show a magnetic recording medium for use as a mother and a magnetic recording medium for use as a copy, respectively. As shown in FIG. 15, the magnetic recording medium for use as a mother is of a two-layer structure, and comprises a first magnetic layer 102 and a second magnetic layer 103 which are successively deposited on a nonmagnetic support 101. As shown in FIG. 16, the magnetic recording medium for use as a copy comprises a magnetic layer 112 deposited on a nonmagnetic support 111. FIG. 17 shows magnetic characteristics of the magnetic recording medium for use as a copy. As shown in FIG. 17, it is assumed that an x-axis extends along the surface of the nonmagnetic support 111 and a z-axis extends perpendicularly to the surface of the nonmagnetic support 111. Then, the magnetic layer 112 has an easy axis e.a. of magnetization which extends at an angle $\theta$ with respect to the x-axis, and a hard axis h.a. of magnetization extending perpendicularly to the easy axis e.a. of magnetization. Similarly, the magnetic recording medium for use as a mother has an easy axis e.a. of magnetization extending at an angle $\theta$ with respect to an in-plane direction in the magnetic layers.

A magnetic recording transfer process using the magnetic recording mediums shown in FIGS. 15, 16, 17 is shown in FIG. 18. As shown in FIG. 18, the magnetic recording medium for use as a mother and the magnetic recording medium for use as a copy are superimposed one on the other with their magnetic layers confronting each other such that the gradients of the easy axes of magnetization thereof are opposite to each other, and a biasing magnetic field $H_B$ is applied to the magnetic recording mediums in a direction substantially along the easy axis Ce.a. of magnetization of the magnetic recording medium as a copy. The hard axis of magnetization of the magnetic recording medium as a mother extends substantially along the biasing magnetic field $H_B$, so that signals recorded on the magnetic recording medium as a mother are transferred or copied to the magnetic recording medium as a copy in a manner not to easily erase the signals recorded on the magnetic recording medium as a mother.

The magnetic recording mediums as a mother and a copy, i.e., a mother tape and a copy tape, were manufactured under conditions given in Table 3 below.

Table 3

| | | Ingot composition [wt %] | Incident angle [deg] | Amount of introduced oxygen [CC/min] |
|---|---|---|---|---|
| Inventive Example 4 | Mother | $Co_{100}$ | 45° | 250 |
| | Copy | $Co_{80}Ni_{20}$ | 45° | 300 |
| Inventive Example 5 | Mother | $Co_{100}$ | 45° | 250 |
| | Copy | $Co_{100}$ | 45° | 250 |
| Comparative Example 3 | Mother | $Co_{100}$ | 45° | 250 |
| | Copy | $Co_{80}Ni_{20}$ | 45° | 300 |
| Comparative Example 4 | Mother | $Co_{100}$ | 45° | 250 |
| | Copy | $Co_{80}Ni_{20}$ | 45° | 300 |

The film thicknesses of the magnetic layers of the mother tapes according to Comparative Examples 3, 4 were adjusted by adjusting the speed of travel of the nonmagnetic supports while the evaporating conditions were the same. The film thicknesses of the magnetic layers of the mother tapes according to Inventive Examples 4 through 6 were also controlled by adjusting the speed of travel of the nonmagnetic supports. In each of Inventive Examples 4 through 6, the lower magnetic layer was evaporated on the nonmagnetic support, then the tape was wound back, and thereafter the upper magnetic layer was evaporated on the lower magnetic layer.

The copy tapes according to Comparative Examples 3, 4 and Inventive Example 4 were the same as each other The mother tape in Comparative Example 1 was used as the copy tape in Inventive Example 2. In Inventive Example 6, not shown in Table 3 above, the same combination of mother and copy tapes as that in Inventive Example 5 was used, and the angle at which the biasing magnetic field is applied was varied. Tables 4-1, 4-2, 4-3 below show magnetic characteristics in an in-plane direction of the respective tapes and copy output signals of the copy tapes in the magnetic transfer process. The magnetic layer of each of the copy tapes had a thickness of 200 nm (2000 Å). The electromagnetic conversion characteristics were measured using a modification of EVS-900 manufactured by Sony. Information was recorded at a wavelength $\lambda = 0.5$ μm. The electromagnetic conversion characteristics of Comparative Example 3 had a reference value of 0 dB, and the electromagnetic conversion characteristics of other Examples were indicated by relative values with respect to the reference value.

Table 4-1

| | Mother Tape | | |
|---|---|---|---|
| | Coercive force Hc [Oe] | Residual flux density Br [G] | Film thickness Upper/Lower layers (nm) [Å] |
| Inventive Example 4 | 1430 | 4300 | [1000/2000] (100/200) |
| Inventive Example 5 | 1490 | 4400 | [1000/1500] (100/150) |
| Inventive Example 6 | 1490 | 4400 | [1000/1500] (100/150) |
| Comparative Example 3 | 1400 | 4200 | [2000/0] (200/0) |
| Comparative Example 4 | 1350 | 4080 | [2500/0] (250/0) |

Table 4-2

| | Copy Tape | | |
|---|---|---|---|
| | Coercive force Hc [Oe] | Residual flux density Br [G] | Copy output signal [dB] |
| Inventive Example 4 | 1200 | 3600 | + 1.6 |
| Inventive Example 5 | 1400 | 4200 | + 2.3 |
| Inventive Example 6 | 1400 | 4200 | + 2.9 |
| Comparative Example 3 | 1200 | 3600 | 0 |
| Comparative Example 4 | 1200 | 3600 | + 0.2 |

Table 4-3

| | Bias angle [deg] |
|---|---|
| Inventive Example 4 | 90 |
| Inventive Example 5 | 90 |
| Inventive Example 6 | 110 |
| Comparative Example 3 | 90 |
| Comparative Example 4 | 90 |

It will be understood from Tables 4-1, 4-2, 4-3 that in Inventive Examples 4 through 6, the copy output signals of the copy tapes were much larger than the conventional copy output signals by using the magnetic recording medium according to the present invention as the mother tapes.

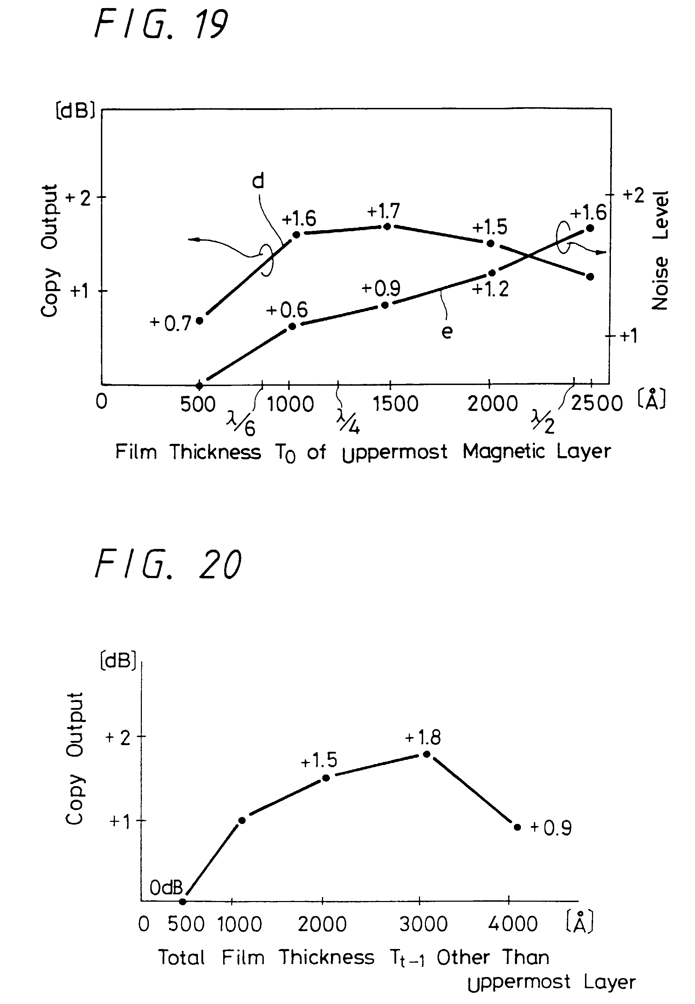

Only the film thickness of the upper magnetic layer of the mother tape in the combination of Inventive Example 4 was varied from 50 nm (500 Å) to 250 nm (2500 Å) and the copy output signal and the noise level of the copy tape were measured, and the measured results are shown in FIG. 19. The film thickness of the lower magnetic layer was of a constant value of 200 nm (2000 Å), and the shortest recorded wavelength $\lambda$ was 0.5 $\mu$m. The noise level was measured at 7 MHz. The copy output signal and the noise level of Comparative Example 1 were set to 0 dB, and the other copy output signals and the noise levels were of relative values with respect thereto. The solid-line curve d represents the copy output signal, whereas the solid-line curve e represents the noise level.

It can be seen from FIG. 19 that the copy output signal increased as the film thickness was greater than 50 nm (500 Å), i.e., $\lambda/10$, was maximum at the film thickness of about 150 nm (1500 Å), and gradually decreased as the film thickness was greater than 250 nm (2500 Å). Therefore, the film thickness $T_o$ of the uppermost magnetic layer of the magnetic recording medium a mother is selected to be equal to or greater than $\lambda/10$ and smaller than $\lambda/2$. For a copy output signal greater than the conventional copy output level by about 1 dB or more, the film thickness $T_o$ should preferably have a lower limit of about $\lambda/6$.

The copy output signal gradually decreased when the film thickness To exceeded $\lambda/2$. Therefore, the film thickness To of the uppermost magnetic layer is selected to be equal to or greater than $\lambda/10$ and smaller than $\lambda/2$. For a higher copy output signal, the film thickness To should preferably be about $\lambda/6$ or greater.

It is recognized that the depth to which signals are recorded on general metal-evaporated tapes is about $\lambda/4$ as with the coated recording media. Therefore, the film thickness To of the uppermost magnetic layer of a metal-evaporated tape should preferably have a lower limit of about $\lambda/4$.

If the film thickness of the magnetic layer were too large, the waveform of copy output signals would be unstable, and the S/N ratio thereof would be lowered. The magnetic tape would tend to develop cracks, and hence would be reduced in reliability. The time required for film growth on the magnetic tape would be increased, resulting in a reduction in productivity. Table 5 below shows surface configurations checked when the total film thickness $T_{t-1}$ of the lower magnetic layer was of a constant value of 200 nm (2000 Å) and the film thickness $T_o$ of the uppermost magnetic layer varied from 50 (500) to 250 nm (2500 Å). In Table 5, the mark ○ indicates a good surface configuration, the mark △ indicates a fair surface configuration, and the mark × indicates a cracked surface configuration.

Table 5

| Film thickness of uppermost magnetic layer [Å] (nm) | Surface configuration |
| --- | --- |
| [500] (50) | ○ |
| [1000] (100) | ○ |
| [1500] (150) | ○ |
| [2000] (200) | △ ~ ○ |
| [2500] (250) | × |

As can be seen from Table 5, to prevent the magnetic tape from developing cracks, the film thickness $T_o$ of the uppermost magnetic layer should preferably be up to 200 (2000) ~ 250 nm (2500 Å).

FIG. 20 shows copy output signals measured when the total film thickness $T_{t-1}$ except the uppermost magnetic layer was varied and the shortest recorded wavelength $\lambda$ was 1 $\mu$m. The uppermost magnetic layer had a constant thickness of 100 nm (1000 Å). The copy output signal of Comparative Example 3 at $\lambda = 1$ $\mu$m was set to 0 dB, and the other output signals were of relative values with respect thereto. FIG. 20 indicates that when the total film thickness $T_{t-1}$ of the lower magnetic layer was 50 nm (500 Å), the copy output signal was about the same as that of Comparative Example 3, and no advantage accrued from the multiple magnetic layer structure in a relatively long wavelength range.

When the total film thickness $T_{t-1}$ of the lower magnetic layer increased beyond the film thickness $T_o$ of the uppermost magnetic layer, the copy output signal increased, and became maximum when the total film thickness $T_{t-1}$ was 300 nm (3000 Å), indicating an advantage owing to the increased entire film thickness including that of the uppermost magnetic layer. Therefore, the ratio of the film thickness $T_o$ of the uppermost magnetic layer to the total film thickness $T_{t-1}$ except the uppermost magnetic layer is selected to be $T_o \le T_{t-1}$.

If the total film thickness $T_{t-1}$ of the lowermost magnetic layer were about 400 nm (4000 Å) and the entire film thickness including that of the uppermost magnetic layer were about 500 nm (5000 Å), the copy output signal would be reduced due to a degradation of the surface configuration of the recording medium, resulting in a reliability reduction. Consequently, the entire film thickness including that of the uppermost magnetic layer should preferably have an upper limit of 500 nm (5000 Å).

According to the present invention, as described above, the electromagnetic conversion characteristics of the magnetic recording medium are improved.

Furthermore, the magnetic recording method according to the present invention keeps in proper ranges the energy products of magnetic recording mediums which are used in compressing and recording a digital image signal in a manner to reduce playback distortion, and also the ratio of film thicknesses of multiple evaporated layers. Therefore, the electromagnetic conversion characteristics and the error rate in the recording and reproducing of a digital image signal can greatly be improved.

In addition, the film thickness of a thin metallic magnetic layer of a magnetic recording medium for use as a mother in a magnetic recording process is optimized to increase the magnetic transfer efficiency, particularly with respect to short-wavelength signals, for improving the electromagnetic conversion characteristics of a magnetic recording medium for use as a copy.

**Claims**

1. A magnetic recording process in which a magnetic recording medium for use as a mother and a magnetic recording medium as a copy are superimposed one on the other with gradients of respective easy axes of magnetization thereof being opposite to each other, and an external biasing magnetic field is applied to transfer a recording magnetization from the magnetic recording medium as a mother to the magnetic recording medium as a copy, said magnetic recording medium as a mother comprising:

a nonmagnetic support (101); and
a plurality of magnetic layers (102; 103) disposed on said nonmagnetic support, said magnetic layers comprising thin metallic magnetic films, respectively; characterized in that
the film thickness $T_0$ of the uppermost magnetic layer (103) and the shortest wavelength $\lambda$ of a signal to be recorded by the magnetic recording medium satisfy the following relationship:

$$(\lambda/4) \leq T_0 < (\lambda/2).$$

2. The magnetic recording process of claim 1, wherein the film thickness $T_0$ of the uppermost magnetic layer (103) and the total film thickness $T_{t-1}$ except said uppermost magnetic layer satisfy the following relationship:

$$T_0 \leq T_{t-1}.$$

**Patentansprüche**

1. Magnetisches Aufzeichnungsverfahren, bei welchem ein magnetisches Aufzeichnungsmedium für den Gebrauch als eine Mutter oder ein Grundmedium und ein magnetisches Aufzeichnungsmedium als eine Kopie übereinandergelegt werden, wobei die Gradienten von ihren entsprechenden leichten Achsen der Magnetisierung einander entgegengesetzt sind und ein externes vormagnetisierendes Feld angelegt wird, um eine Aufzeichnungsmagnetisierung von dem als eine Mutter verwendeten magnetischen Aufzeichnungsmedium zu dem als eine Kopie verwendeten magnetischen Aufzeichnungsmedium übertragen wird, wobei das als eine Mutter verwendete magnetische Aufzeichnungsmedium

einen nichtmagnetischen Träger (101); und
eine Vielzahl von magnetischen Schichten (102; 103) aufweist, die auf dem nichtmagnetischen Träger angeordnet sind, wobei die magnetischen Schichten jeweils dünne metallische magnetische Filme aufweisen;

**dadurch gekennzeichnet, daß**
die Filmdicke $T_0$ der obersten magnetischen Schicht (103) und die kürzeste Wellenlänge $\lambda$ eines durch das magnetische Aufzeichnungsmedium aufzuzeichnenden Signals die folgende Beziehung erfüllen:

$$(\lambda/4) \leq T_0 < (\lambda/2).$$

2. Magnetisches Aufzeichnungsverfahren nach Anspruch 1, bei welchem die Filmdicke $T_0$ der obersten magnetischen Schicht (103) und die Gesamtfilmdicke $T_{t-1}$ mit Ausnahme der obersten magnetischen Schicht die folgende Beziehung erfüllen:

$$T_0 \leq T_{t-1}.$$

**Revendications**

1. Procédé d'enregistrement magnétique dans lequel un support d'enregistrement magnétique destiné à être utilisé en tant que support maître et un support d'enregistrement magnétique en tant que support de copie sont superposés l'un sur l'autre, les gradients des axes respectifs de facile aimantation de ceux-ci étant opposés l'un à l'autre, et un champ magnétique de polarisation externe est appliqué de façon à transférer une magnétisation d'enregistrement depuis le support d'enregistrement magnétique en tant qu'enregistrement maître sur le support d'enregistrement magnétique en tant qu'enregistrement de copie, ledit support d'enregistrement magnétique en tant qu'enregistrement maître comprenant :

un support non-magnétique (101), et

une pluralité de couches magnétiques (102, 103) disposées sur ledit support non-magnétique, lesdites couches magnétiques comprenant des films magnétiques métalliques minces, respectivement, caractérisé en ce que l'épaisseur de film $T_0$ de la couche magnétique la plus au-dessus (103) et la longueur d'onde la plus courte $\lambda$ d'un signal à enregistrer par le support d'enregistrement magnétique satisfont la relation suivante :

$$(\lambda/4) \leq T_0 < (\lambda/2).$$

2. Procédé d'enregistrement magnétique selon la revendication 1, dans lequel l'épaisseur de film $T_0$ de la couche magnétique la plus au-dessus (103) et l'épaisseur de film totale $T_{t-1}$ à l'exception de ladite couche magnétique la plus au-dessus, satisfont la relation suivante :

$$T_0 \leq T_{t-1}.$$

# FIG. 1

FIG. 2

# FIG. 3

# FIG. 4

FIG. 5

EP 0 576 954 B1

FIG. 6

## FIG. 7

<u>11</u>

```
      ┌──────────────┐      ┌──────────────┐
─────▶│  Adaptive    │─────▶│    PR4       │─────▶
      │  Scrambler   │      │  Precoder    │
      └──────────────┘      └──────────────┘
             │                     │
             51                    52
```

## FIG. 8

<u>15</u>

```
   ┌──────────┐    ┌──────────┐    ┌──────────────┐
──▶│   PR4    │───▶│  Viterbi │───▶│  Descrambler │──▶
   │ Processor│    │ Decoder  │    │              │
   └──────────┘    └──────────┘    └──────────────┘
        │               │                 │
        53              54                55
```

# FIG. 9A

# FIG. 9B

## FIG. 10

## FIG. 11

## FIG. 12

## FIG. 13

Film Thickness $T_0$ of Uppermost Magnetic Layer

*F I G. 14*

*F I G. 15*

*F I G. 16*

FIG. 17

FIG. 18

## F I G. 19

Film Thickness $T_0$ of Uppermost Magnetic Layer

## F I G. 20

Total Film Thickness $T_{t-1}$ Other Than
Uppermost Layer